# EUROPEAN PATENT APPLICATION

(11) **EP 3 750 660 A1**
(43) Date of publication of application: **16.12.2020**
(21) Application number: 20177840.4
(22) Date of filing: 02.06.2020
(51) Int. Cl.: B23K 20/06, B23K 20/08, B23K 20/16, B23K 20/227, B23K 26/00, B23K 26/354, B23K 103/16, B23K 103/20

(54) **METHOD OF MOLDING COMPOSITE MATERIAL AND STRUCTURAL BODY INCLUDING COMPOSITE MATERIAL**

(30) Priority: 10.06.2019 JP 2019107967; 10.06.2019 JP 2019108110
(71) Applicant: Mazda Motor Corporation, Aki-gun Hiroshima 730-8670 (JP)
(72) Inventor: YAMAGUCHI, Kojiro, Hiroshima, 730-8670 (JP); TAKAHASHI, Katsunori, Hiroshima, 730-8670 (JP); MORIWAKI, Motonori, Hiroshima, 730-8670 (JP); NAKAI, Masanori, Hiroshima, 730-8670 (JP); ICHIHARA, Koichiro, Hiroshima, 730-8670 (JP); TOMINAGA, Yasuhiro, Hiroshima, 730-8670 (JP); UJIHIRA, Naoki, Hiroshima, 730-8670 (JP)
(74) Representative: Laufhütte, Dieter

(57) **Abstract**

A molding method according to the present invention is a method of molding a composite material (60) including a first member (28), a second member (26), and a reinforcement member (30) interposed between the first member (28) and the second member (26), the method including a first step of disposing the reinforcement member (30) between the first member (28) and the second member (26), and a second step of causing the first member (28) to collide with the second member (26) by a predetermined urging force after the reinforcement member (30) is disposed, thus joining the first member (28) and the second member (26) with the reinforcement member (30) interposed between the first member (28) and the second member (30). The composite material (60) has a thickness of 0.01 mm or more and 1 mm or less.

## Description

### Technical Field

The present invention relates to a method of molding a composite material, and a structural body including the composite material molded by the method.

### Background Art

Japanese Patent No. 6124749 describes, as a method of molding a composite material, a method of press-contacting two metal members with a reinforcement member containing carbon fiber or metal fiber interposed between the two metal members. The composite material molded by this molding method has high mechanical strength. For this reason, by using a molded article obtained by press-molding the composite material as, for example, a structural component of a vehicle, the mechanical strength of the structural component can be improved.

Meanwhile, there is a need for joining the composite material to a component, which has been already molded, in order to reinforce the component. When a joining surface of the component to which the composite material is joined is flat, it is relatively easy to join the composite material to the joining surface by a method such as welding. However, when the joining surface of the component is not flat, that is, when the joining surface is a curved surface, it is necessary to deform the composite material to the curved surface. Further, in order to avoid an increase in weight due to reinforcement, the composite material to be joined is preferably as light as possible. As described above, the composite material to be joined to the component is preferably easily deformable and lightweight.

### Summary of Invention

An object of the present invention is to provide a method of molding a composite material and a structural body including the composite material that can improve mechanical strength of a component while preventing an increase in weight.

To achieve the above object, the present invention provides a method of molding a composite material including a first member, a second member, and a reinforcement member interposed between the first member and the second member, the method including a first step of disposing the reinforcement member between the first member and the second member, and a second step of causing the first member to collide with the second member by a predetermined urging force after the reinforcement member is disposed, thus joining the first member and the second member with the reinforcement member interposed between the first member and the second member, wherein the composite material has a thickness of 0.01 mm or more and 1 mm or less.

In addition, a structural body according to the present invention includes the composite material molded by the molding method and another component to which the composite material is joined.

### Brief Description of Drawings

FIG. 1 is a perspective view illustrating a schematic configuration of an electromagnetic molding device used in a first embodiment of the present invention in which a composite material is molded by electromagnetic molding;
FIG. 2 is a schematic cross-sectional view illustrating a state of each member before an electromagnetic force is applied;
FIG. 3 is a schematic cross-sectional view illustrating a state where the respective members are joined by the electromagnetic force applied to the members;
FIG. 4 is a graph illustrating a relationship between energy required for joining and a plate thickness;
FIG. 5 is a side view of the composite material as viewed in a direction V in FIG. 3;
FIG. 6 is a schematic cross-sectional view of a structural body obtained by joining the composite material molded by the method according to the first embodiment to another component;
FIG. 7 is a view corresponding to FIG. 2 for describing a molding method according to a second embodiment of the present invention;
FIG. 8 is a view corresponding to FIG. 3 for describing the molding method according to the second embodiment;
FIG. 9 is a side view of a composite material as viewed in a direction IX in FIG. 8;
FIG. 10 is a side view of a structural body obtained by joining the composite material molded by the method according to the second embodiment to another component;
FIG. 11 is a diagram corresponding to FIG. 9 for describing a modification of the second embodiment;
FIG. 12 is a view for describing a third embodiment of the present invention in which a composite material is molded by explosive welding, and is a schematic cross-sectional view illustrating a state of each member before an explosive force is applied;
FIG. 13 is a schematic cross-sectional view illustrating a state where the respective members are joined by the explosive force applied to the members;
FIG. 14 is a view for describing a fourth embodiment of the present invention in which a composite material is molded by laser ablation, and is a schematic cross-sectional view illustrating a state of each member before laser ablation occurs; and
FIG. 15 is a schematic cross-sectional view illustrating a state where the respective members are joined by laser ablation.

### Description of Embodiments

Hereinafter, a molding method and a composite material obtained by the molding method according to an embodiment of the present invention will be described with reference to the accompanying drawings.

### (1) First Embodiment

### (1-1) Molding Device

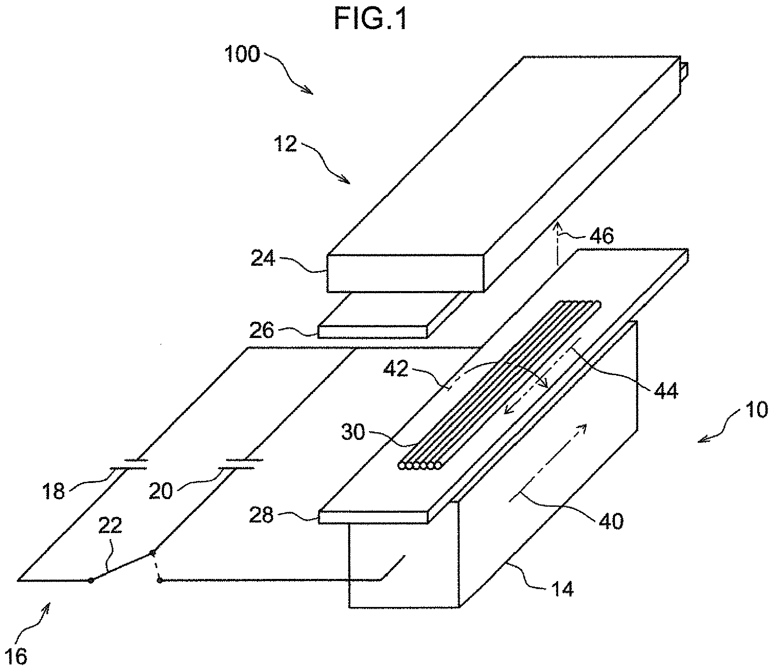

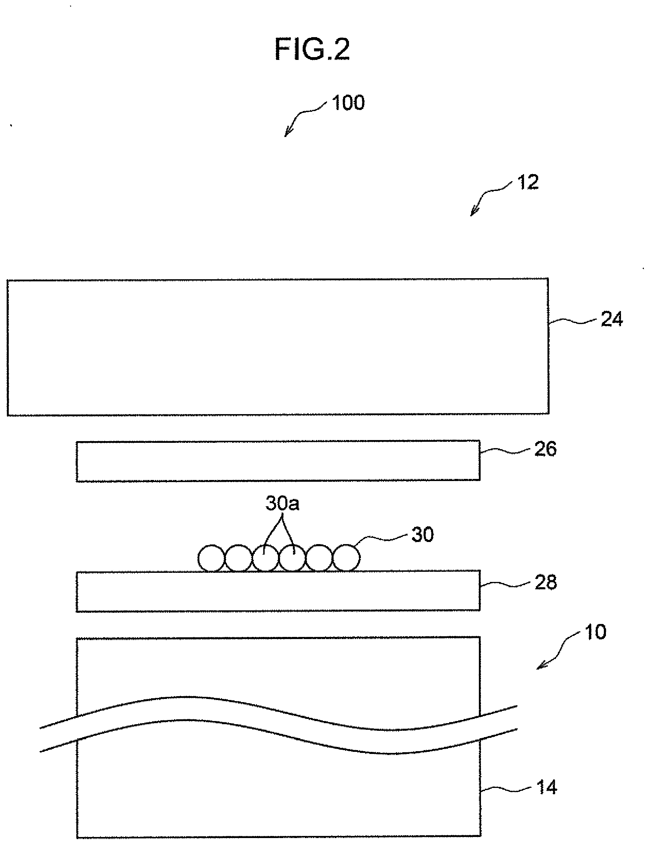

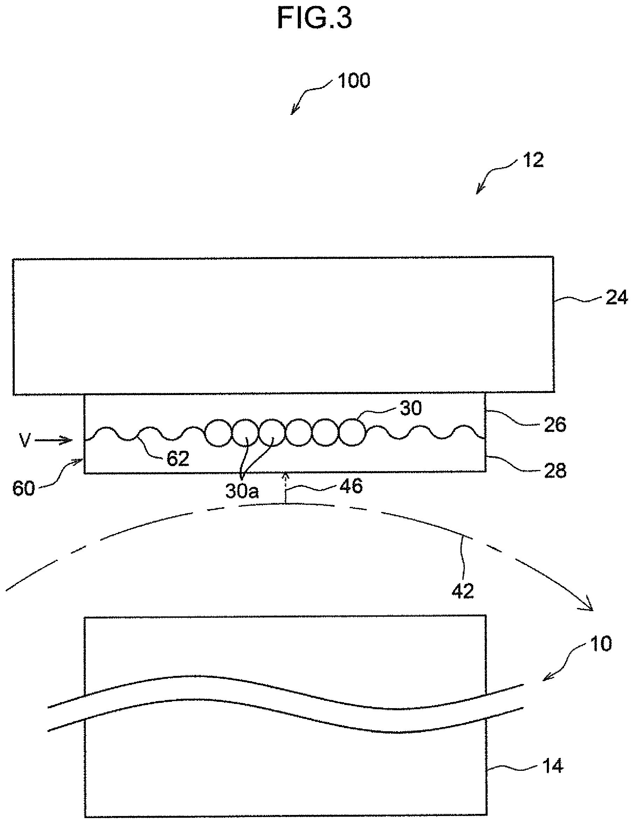

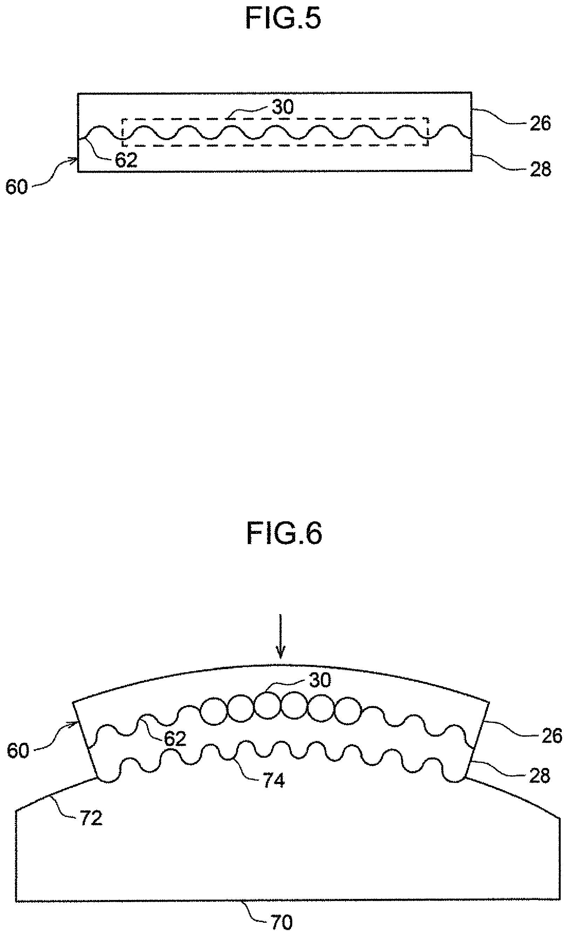

FIG. 1 and FIG. 2 are views illustrating a schematic configuration of an electromagnetic molding device 100 used in a molding method according to a first embodiment of the present invention. The electromagnetic molding device 100 is a molding device that molds a composite material 60 (FIG. 3 and FIG. 5) by electromagnetic molding using an electromagnetic force, and joins a conductive member 28 (first member) and a joined member 26 (second member) with a reinforcement member 30 interposed between the conductive member 28 and the joined member 26.

As illustrated in FIG. 1 and FIG. 2, the electromagnetic molding device 100 mainly includes a lower structure 10 and an upper structure 12 disposed above the lower structure 10.

The lower structure 10 includes a block-like conductor 14 extending in a direction perpendicular to a paper surface of FIG. 2 and a pulse generating circuit 16 (FIG. 1) electrically connected to the conductor 14. The pulse generating circuit 16 is configured by a general charge and discharge circuit, and includes a DC power supply 18, a capacitor 20, and a switch 22. Electric charges are stored in the capacitor 20, and a current instantaneously flows from the capacitor 20 to the conductor 14 in response to opening and closing of the switch 22.

The upper structure 12 includes a fixing part 24 made of a highly rigid block-like member extending in the direction perpendicular to the paper surface of FIG. 2, and a jig (not illustrated) that holds the joined member 26 at a position below the fixing part 24. The jig, for example, fixes an end of the joined member 26 to the fixing part 24, thus supporting the joined member 26 so as not to fall.

### (1-2) Molding Method

Next, there will be described an example of a method of molding the composite material 60 (FIG. 3 and FIG. 5) using the electromagnetic molding device 100 described above. At the time of molding, first, as illustrated in FIG. 2, the conductive member 28 is disposed above the conductor 14 with a space (for example, via a spacer), and the reinforcement member 30 is disposed on an upper surface of the conductive member 28. The joined member 26 is disposed below the fixing part 24 (above conductive member 28 and reinforcement member 30).

The conductive member 28 is a plate-like member extending in the direction perpendicular to the paper surface of FIG. 2. In the first embodiment, the conductive member 28 is a steel plate having a certain thickness.

The reinforcement member 30 has a plurality of strand (rope or string) tows 30a extending in the direction perpendicular to the paper surface of FIG. 2. In the first embodiment, each of the plurality of tows 30a is an aggregate of long fiber bundles (filaments) obtained by bundling a large number of carbon single fibers. That is, the reinforcement member 30 is made of carbon fiber. The plurality of tows 30a of the reinforcement member 30 are arranged in parallel on the upper surface of the conductive member 28 while being aligned in the same direction. In such a state where the tows 30a are arranged in parallel, the length of the reinforcement member 30 (length of each tow 30a) is less than the length of the conductive member 28 (see FIG. 1), and the width of the reinforcement member 30 (total width of plurality of tows 30a) is less than the width of the conductive member 28 (see FIG. 1 and FIG. 2). In other words, the reinforcement member 30 is disposed only on an area of the upper surface of the conductive member 28 except for its peripheral edge portion.

The joined member 26 is a plate-like member extending in the direction perpendicular to the paper surface of FIG. 2. In the first embodiment, the joined member 26 is an aluminum alloy plate having a certain thickness. The width (dimension in left-right direction in FIG. 2) and length of the joined member 26 are substantially equal to the width and length of the conductive member 28. The entire lower surface of the joined member 26 opposes the upper surface of the conductive member 28 with the reinforcement member 30 interposed between the joined member 26 and the conductive member 28. FIG. 2 illustrates a state where the joined member 26 and the conductive member 28 are opposed to each other with a sufficient space therebetween for the sake of convenience. However, the distance between the joined member 26 and the conductive member 28 is adjusted to an appropriate value suitable for joining of the joined member 26 and the conductive member 28.

The pulse generating circuit 16 operates in a state where the joined member 26, the conductive member 28, and the reinforcement member 30 are disposed in the positional relationship described above. As a result, a pulse current 40, which is indicated by a dashed and dotted arrow in FIG. 1, is applied to the conductor 14. The pulse current 40 is a single-pulse current having a current value of about 10 kA to 200 kA and a pulse width of about 100 µsec or less.

Due to the application of the pulse current 40, an instantaneous magnetic field 42, which is indicated by a dashed and dotted curved arrow in FIG. 1, is generated around the conductor 14. At the same time, an induced current 44, which is indicated by a dashed and double dotted arrow in FIG. 1, is generated inside the conductive member 28 by so-called electromagnetic induction. The induced current 44 flows in a direction opposite to that of the pulse current 40 (direction from back side to front side in FIG. 1). As a result, an upward electromagnetic force 46, which is indicated by a dashed and double dotted arrow in FIG. 1, is applied to the conductive member 28. In response to the electromagnetic force 46, the conductive member 28 is instantaneously urged to fly toward the joined member 26, which is disposed above the conductive member 28, and collides with the joined member 26 with a large force. As illustrated in FIG. 3, the conductive member 28 and the joined member 26 are joined by this collision with the reinforcement member 30 interposed between the conductive member 28 and the joined member 26, so that the composite material 60 is molded. The impact when the conductive member 28 collides with the joined member 26 is absorbed by the fixing part 24.

In the first embodiment, the thickness of the composite material 60 is set to about 1 mm, more specifically, 1 mm or a slightly smaller value. In order to achieve this thickness (≈ 1 mm), the thickness of each of the conductive member 28 and the joined member 26 is set to about 0.5 mm. That is, the conductive member 28 is a steel plate having a thickness of about 0.5 mm, and the joined member 26 is an aluminum alloy plate having a thickness of about 0.5 mm in the first embodiment. The diameter of each of the plurality of tows 30a constituting the reinforcement member 30 is set to about 0.3 mm. That is, the reinforcement member 30 is carbon fiber including the tows 30a that have a diameter of about 0.3 mm and are arranged in parallel (in other words, carbon fiver having a maximum thickness of about 0.3 mm) in the first embodiment.

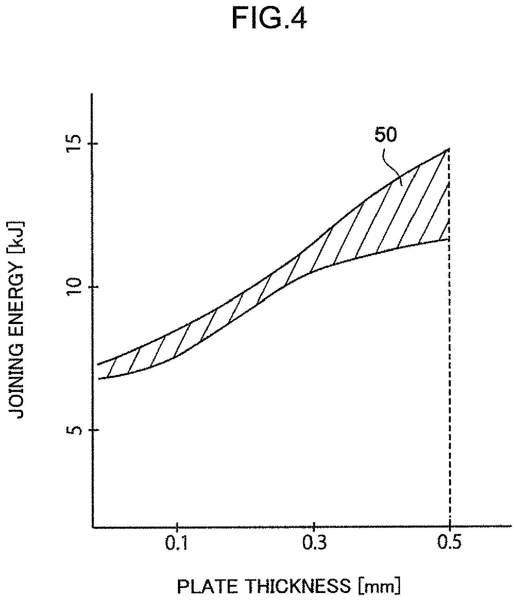

In the first embodiment in which the combination of materials and thicknesses described above is adopted, it is preferable to apply electric energy of 12 kJ to 14 kJ to the conductor 14 by the pulse generating circuit 16. FIG. 4 is a graph for describing this energy application, and illustrates a relationship between the plate thickness of the members 28, 26 and the applied energy in a case where the conductive member 28 is made of steel and the joined member 26 is made of an aluminum alloy. An area 50 in the graph of FIG. 4 indicates the range of the applied energy in which the conductive member 28 and the joined member 26 can be appropriately joined. When the plate thickness of each of the conductive member 28 and the joined member 26 is 0.5 mm as in the first embodiment, the upper limit of the area 50 is more than 14 kJ and less than 15 kJ, and the lower limit of the area 50 is more than 11 kJ and less than 12 kJ. Consequently, it is understood that if the energy of 12 kJ or more and 14 kJ or less is applied, the conductive member 28 and the joined member 26 are appropriately joined. If the applied energy is less than 12 kJ, the joining strength between the conductive member 28 and the joined member 26 may be insufficient. If the applied energy exceeds 14 kJ, either the conductive member 28 or the joined member 26 may be damaged.

By applying energy of 12 kJ to 14 kJ to the conductor 14 as described above, the conductive member 28 made of steel having a thickness of about 0.5 mm and the joined member 26 made of an aluminum alloy having a thickness of about 0.5 mm are appropriately joined with the reinforcement member 30 interposed between the conductive member 28 and the joined member 26, so that the composite material 60 having a thickness of about 1 mm is molded. In this case, a characteristic wavy pattern 62 appears at a joining interface between the conductive member 28 and the joined member 26 (see FIG. 3).

In the first embodiment, the length and width of the reinforcement member 30 are less than those of the conductive member 28 and the joined member 26, as described above. For this reason, when the conductive member 28 and the joined member 26 are joined, the periphery of the reinforcement member 30 is closed by the conductive member 28 and the joined member 26. In other words, the conductive member 28 and the joined member 26 are joined so as to seal the reinforcement member 30 between the conductive member 28 and the joined member 26 (see FIG. 5). Since it is possible to prevent the reinforcement member 30 from being exposed to outside, electrolytic corrosion that may occur when an end of the reinforcement member 30 contacts another component is prevented.

### (1-3) Joining to Another Component

Next, an example of a structural body obtained by joining the composite material 60 molded by the method described above to another component will be described with reference to FIG. 6. The structural body illustrated in FIG. 6 includes the composite material 60 and a reinforced component 70 (another component) to which the composite material 60 is joined. The composite material 60 is joined to the reinforced component 70 by electromagnetic molding described above. Specifically, the composite material 60 is integrated with the reinforced component 70 by the conductive member 28 (first member) being joined to a joining surface 72 of the reinforced component 70.

The reinforced component 70 is made of the same material as the conductive member 28, which is a joining target, that is, made of steel. This prevents electrolytic corrosion that may occur between the reinforced component 70 and the conductive member 28.

The joining surface 72 of the reinforced component 70 to which the composite material 60 (conductive member 28) is joined is a curved surface. A characteristic wavy pattern 74 appears between the joining surface 72 and the conductive member 28, that is, at a joining interface between the composite material 60 and the reinforced component 70. Since the thickness of the composite material 60 is as small as about 1 mm in the first embodiment, the composite material 60 can be easily deformed (curved) to the shape of the joining surface 72 by electromagnetic molding. Accordingly, occurrence of a gap between the composite material 60 and the joining surface 72 is prevented, and sufficient joining strength between the composite material 60 and the reinforced component 70 is achieved.

The composite material 60 joined to the reinforced component 70 reinforces the reinforced component 70 by an action of carbon fiber (reinforcement member 30) in the composite material 60. That is, the structural body including the reinforced component 70 and the composite material 60 has high mechanical strength. Here, the mechanical strength is a concept including both proof stress and rigidity (Young's modulus).

### (1-4) Modifications

In the first embodiment, the composite material 60 having a thickness of about 1 mm (1 mm or a slightly smaller value) is molded by joining the conductive member 28 having a thickness of about 0.5 mm and the joined member 26 having a thickness of about 0.5 mm to each other. However, the thickness of the composite material 60 can be appropriately changed. However, in view of the moldability of the composite material 60 or the like, the thickness of the composite material 60 should be set to 0.01 mm or more and 1 mm or less, preferably 0.1 mm or more and 1 mm or less. As an example of the latter range, the thickness of the composite material 60 may be set to 0.2 mm. Such a composite material 60 having a thickness of about 0.2 mm can be molded by, for example, setting the thickness of each of the conductive member 28 and the joined member 26 to about 0.1 mm and setting the energy applied by the pulse generating circuit 16 to about 8 kJ. In this case, the diameter of each tow 30a of the reinforcement member 30 may be, for example, about 0.06 mm. If the thickness of the composite material 60 is 0.2 mm or less, the composite material 60 is easily deformed to the shape of the reinforced component 70 (another components). Consequently, the composite material 60 can be easily joined to the joining surface 72 of the reinforced component 70 even when the joining surface 72 has a relatively complicated shape.

While a steel plate is used as the conductive member 28 in the first embodiment, the conductive member 28 may be made of a metal material other than steel, for example, an aluminum alloy. While an aluminum alloy plate is used as the joined member 26 in the first embodiment, the joined member 26 may be made of a metal material other than aluminum, for example, steel. Further, the joined member 26 may be made of a resin. In any case, if the energy applied by the pulse generating circuit 16 is appropriately determined based on the thicknesses of each of the conductive member 28 and the joined member 26 similarly to FIG. 4, the conductive member 28 and the joined member 26 can be appropriately joined.

While carbon fiber is used as the reinforcement member 30 in the first embodiment, the reinforcement member 30 may be made of a fiber material other than carbon fiber, for example, glass fiber or Kevlar.

While the conductive member 28 of the composite material 60 is joined to the reinforced component 70 in the first embodiment, the joined member 26 of the composite material 60 may be joined to the reinforced component 70. In this case, in view of preventing electrolytic corrosion, the reinforced component 70 is preferably made of the same material as the joined member 26.

While electromagnetic molding that is also used when the composite material 60 is molded is employed as the method of joining the composite material 60 to the reinforced component 70 in the first embodiment, the method of joining the composite material 60 to the reinforced component 70 is not limited to electromagnetic molding. For example, it is also possible to employ a molding method using explosive welding or laser ablation, which will be described later. Whichever method is used, the characteristic wavy pattern 74 (FIG. 6) appears at the joining interface between the composite material 60 and the reinforced component 70.

### (2) Second Embodiment

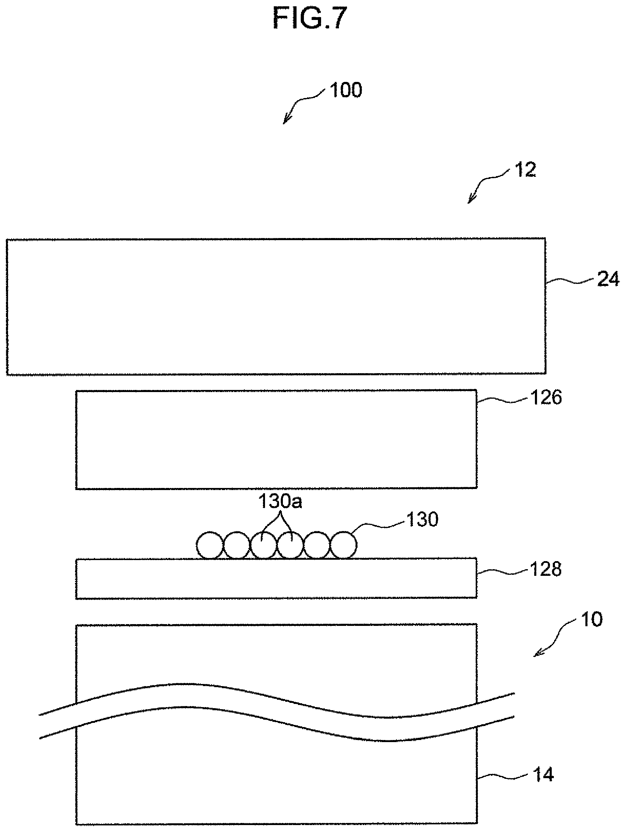

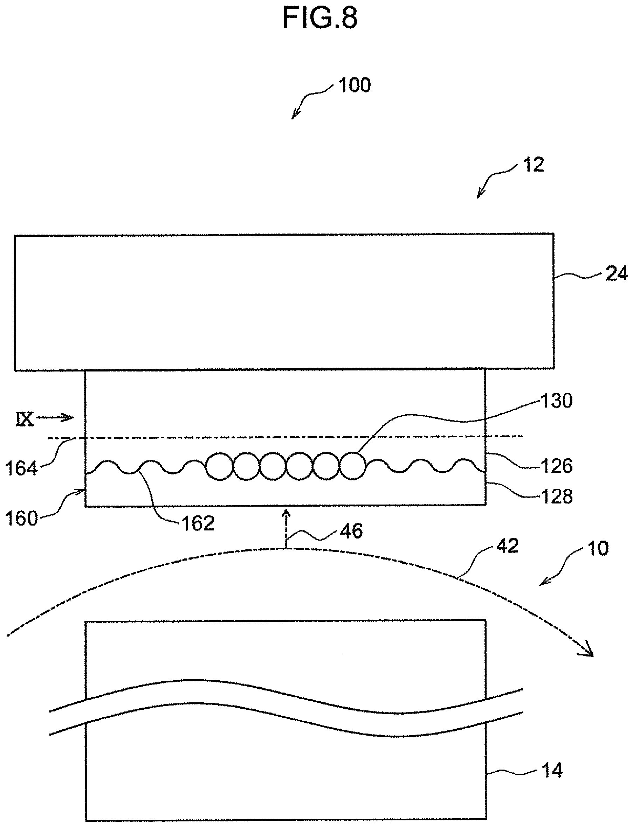

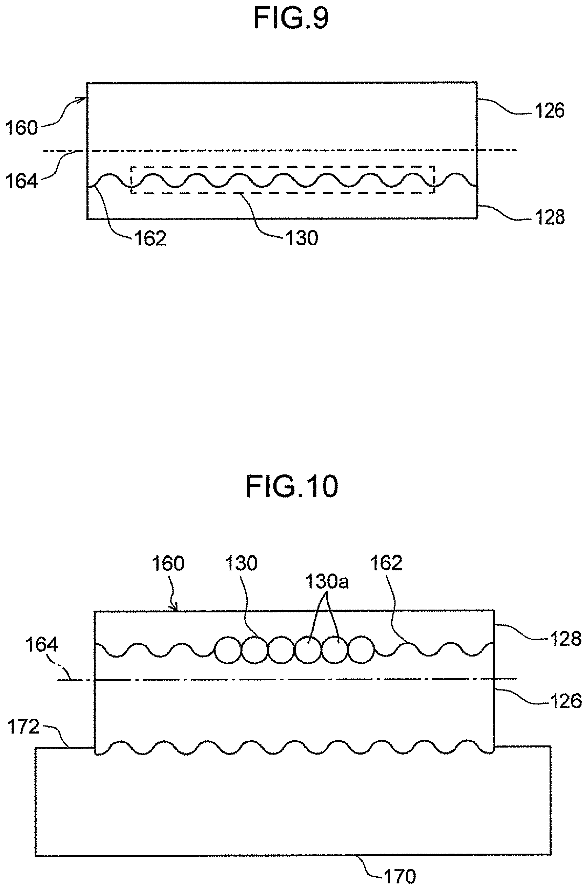

A molding method according to a second embodiment of the present invention will be described with reference to FIGS. 7 to 9. In the description of the second embodiment, the same components as those in the first embodiment (FIGS. 1 to 6) are denoted by the same reference numerals, and detailed description thereof will be omitted. As illustrated in FIGS. 7 to 9, in the second embodiment, a composite material 160 (FIG. 8 and FIG. 9) is molded by using the electromagnetic molding device 100 having a configuration similar to that in the first embodiment. The composite material 160 includes a conductive member 128 (first member), a joined member 126 (second member) to which the conductive member 128 is joined, and a reinforcement member 130 disposed between the conductive member 128 and the joined member 126. The conductive member 128 is a steel plate, and the joined member 126 is an aluminum alloy plate. The reinforcement member 130 is made of carbon fiber, and includes a plurality of strand tows 130a having a predetermined diameter. When the composite material 160 is molded, similarly to the first embodiment, a pulse current is applied to the conductor 14 and the conductive member 128 collides with the joined member 126 by the electromagnetic force 46 based on the pulse current. As a result, the two members 128, 126 are joined with the reinforcement member 130 interposed between the members 128 and 126.

In the second embodiment, the thickness of the joined member 126 is made sufficiently larger than the thickness of the conductive member 128. Specifically, the thickness of the conductive member 128 is about 0.1 mm, and the thickness of the joined member 126 is about 0.25 mm. The diameter of each tow 130a of the reinforcement member 130 is about 0.06 mm. Electromagnetic molding under such dimensional conditions results in the composite material 160 having a thickness of about 0.35 mm. At this time, a characteristic wavy pattern 162 appears at a joining interface between the conductive member 128 and the joined member 126 (see FIG. 8). In addition, the conductive member 128 and the joined member 126 are joined so as to seal the reinforcement member 130 between the conductive member 128 and the joined member 126 (see FIG. 9).

An axis 164 indicated by a dashed and dotted line in FIG. 8 is a neutral axis of the composite material 160. The neutral axis 164 is located at a boundary between an area of the composite material 160 where a tensile stress is generated (tensile area) and an area of the composite material 160 where a compressive stress is generated (compressive area), when the composite material 160 is bent so as to be deformed into an upwardly or downwardly projecting arch in a side view. As illustrated in FIG. 8, the neutral axis 164 is included in the joined member 126 (second member) in the second embodiment. In other words, the reinforcement member 130 between the conductive member 128 and the joined member 126 is located below the neutral axis 164 (side closer to conductive member 128). This means that when a downward bending moment (bending moment to deform composite material 160 into downwardly projecting arch) is applied to the composite material 160, a tensile stress acts on the reinforcement member 130. At this time, the reinforcement member 130 resists the tensile stress acting on the reinforcement member 130 and reduces the bending deformation of the composite material 160.

Here, the position of the neutral axis 164 is determined by the properties of the conductive member 128, the joined member 126, and the reinforcement member 130. Examples of these properties include the thickness and Young's modulus of each of the members. However, the thickness of the reinforcement member 130 consisted by a plurality of strand tows 130a cannot be directly determined. Consequently, a value obtained by dividing the cross-sectional area of the reinforcement member 130 (total cross-sectional area of all tows 130a) by the width of the composite material 160 (left-right dimension in FIG. 8) is used as an approximate value of the thickness of the reinforcement member 130. In other words, the properties that determine the position of the neutral axis 164 are the thickness and Young's modulus of the conductive member 128 and the joined member 126, and the cross-sectional area and Young's modulus of the reinforcement member 130. That is, in the second embodiment, the thickness and Young's modulus of the conductive member 128 and the joined member 126, and the cross-sectional area and Young's modulus of the reinforcement member 130 are determined so that the neutral axis 164 of the composite material 160 is included in the joined member 126.

FIG. 10 illustrates an example of a structural body obtained by joining the composite material 160 molded by the method described above to another component. The structural body illustrated in FIG. 10 includes the composite material 160 and a reinforced component 170 (another component) to which the composite material 160 is joined. The composite material 160 is integrated with the reinforced component 170 by the joined member 126 (second member) being joined to a joining surface 172 of the reinforced component 170.

The reinforced component 170 is made of the same material as the joined member 126, which is a joining target, that is, made of an aluminum alloy. This prevents electrolytic corrosion that may occur between the reinforced component 170 and the joined member 126.

It is assumed in FIG. 10 that a bending moment acts on the reinforced component 170 to deform the reinforced component 170 into an upwardly projecting arch in a side view, and thus a tensile stress is applied on the joining surface 172 of the reinforced component 170. This bending moment also acts on the composite material 160 joined to the reinforced component 170 to generate a tensile stress in an area of the composite material 160 above the neutral axis 164. At this time, the reinforcement member 130 above the neutral axis 164 (side closer to conductive member 128) exerts an effect of resisting the tensile stress and reducing the bending deformation of the composite material 160. As a result, the bending deformation of the reinforced component 170 is reduced. As described above, the composite material 160 is joined to a surface (joining surface 172) of the reinforced component 170 on which the tensile force acts, and thus the bending deformation of the reinforced component 170 is reduced and the bending strength of the reinforced component 170 is improved.

In the second embodiment, the composite material 160 having a thickness of about 0.35 mm is molded by joining the conductive member 128 having a thickness of about 0.1 mm and the joined member 126 having a thickness of about 0.25 mm to each other. However, the thickness of the composite material 160 can be appropriately changed. However, in order to easily join the composite material 160 to the reinforced component 170, the thickness of the composite material 160 should be set to 0.01 mm or more and 1 mm or less, preferably 0.1 mm or more and 1 mm or less. In other words, the thickness of each of the conductive member 128 and the joined member 126 and the diameter of each tow 130a of the reinforcement member 130 are appropriately determined so as to obtain the composite material 160 having a thickness in the range mentioned above (0.01 to 1 mm).

In the second embodiment, the composite material 160 in which the neutral axis 164 is included in the joined member 126 (second member) is molded by electromagnetic molding similar to that in the first embodiment. However, the similar composite material can be molded by a molding method utilizing explosive welding or laser ablation to be described later.

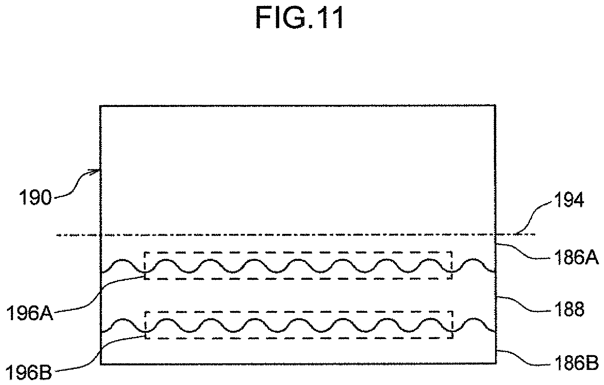

While the two-layer composite material 160, in which the reinforcement member 130 is interposed between two members, i.e., the conductive member 128 and the joined member 126, is molded in the second embodiment, a three-layer composite material 190 illustrated in FIG. 11 may be molded. The composite material 190 of FIG. 11 includes two conductive members 186A, 186B and a joined member 188 that is disposed between the two members 186A and 186B. The conductive member 186A and the joined member 188 are joined to each other with a reinforcement member 196A interposed therebetween, and the conductive member 186B and the joined member 188 are joined to each other with a reinforcement member 196B interposed therebetween.

In the modification illustrated in FIG. 11 described above, a neutral axis 194 of the composite material 190 is located above any of the two reinforcement members 196A, 196B, and is included in the conductive member 186A. In other words, each of the reinforcement members 196A, 196B is disposed in an area (tensile area) where a tensile stress is generated when the composite material 190 is bent into a downwardly projecting arch. The thickness and Young's modulus of the conductive members 186A, 186B and the joined member 188, and the cross-sectional area and Young's modulus of the reinforcement members 196A, 196B are determined so that the neutral axis 194 is located at the position described above (so that reinforcement member is included in tensile area). It is only required that at least one of the reinforcement members 196A, 196B is included in the tensile area. That is, the properties described above may be determined so that the neutral axis 194 is located between the reinforcement members 196A and 196B.

### (3) Third Embodiment

### (3-1) Molding Device

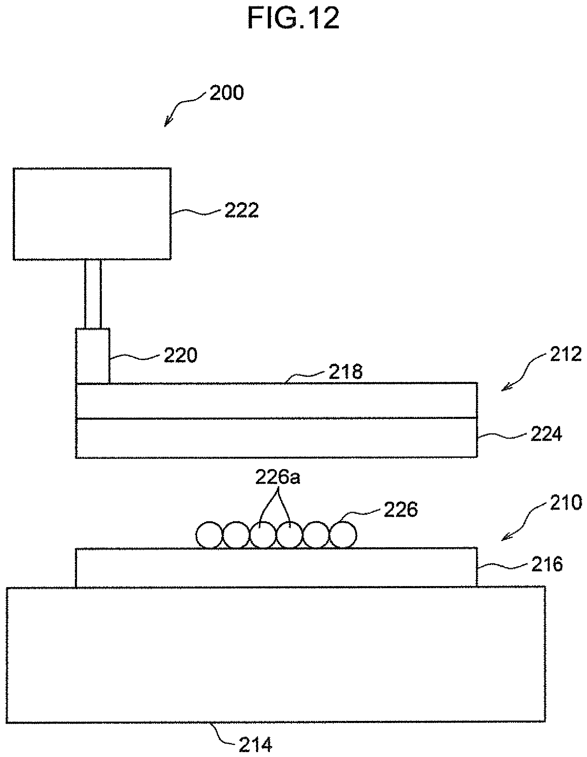

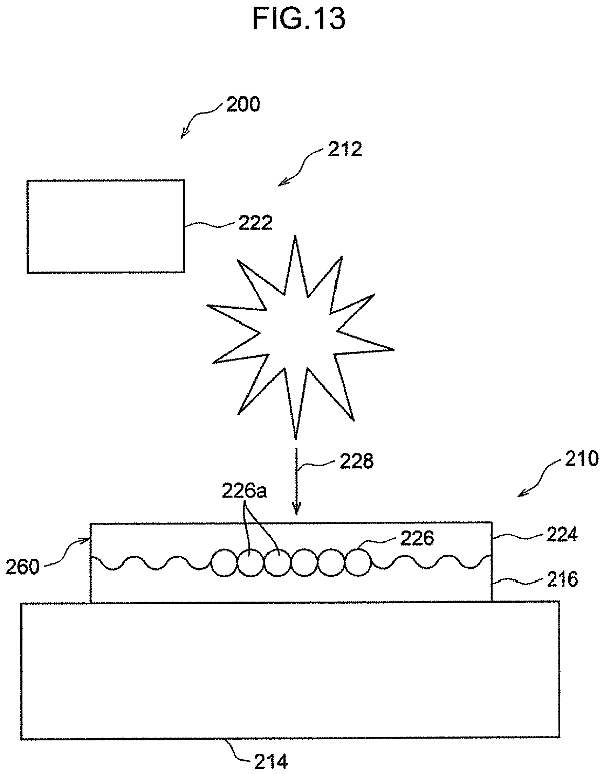

FIG. 12 is a view illustrating a schematic configuration of an explosive welding device 200 used in a molding method according to a third embodiment of the present invention. The explosive welding device 200 is a molding device that molds a composite material 260 (FIG. 13) by explosive welding using an explosive force, and joins a flying member 224 (first member) and a joined member 216 (second member) with a reinforcement member 226 interposed between the flying member 224 and the joined member 216.

As illustrated in FIG. 12, the explosive welding device 200 mainly includes a lower structure 210 and an upper structure 212 disposed above the lower structure 210.

The lower structure 210 includes a fixing part 214 made of a highly rigid block-like member extending in a direction perpendicular to a paper surface of FIG. 12, and a jig (not illustrated) that holds the joined member 216 on an upper surface of the fixing part 214. The jig has, for example, a vise for fixing an end of the joined member 216 on the upper surface of the fixing part 214.

The upper structure 212 includes a block-like explosive 218 extending in the direction perpendicular to the paper surface of FIG. 12, an electric detonator 220 disposed on the left side of an upper surface of the explosive 218, a detonation controller 222 that explodes the explosive 218, and a jig (not illustrated) that holds the flying member 224 on a lower surface of the explosive 218. The electric detonator 220 is electrically connected to the detonation controller 222 and is configured to explode the explosive 218 by receiving an electric signal from the detonation controller 222. The jig is configured to, for example, support an end of the flying member 224 so that the flying member 224 does not fall from the explosive 218 before the explosion of the explosive 218, and at the same time, to allow the flying member 224 to fly toward the joined member 216 after the explosion of the explosive 218.

### (3-2) Molding Method

Next, there will be described an example of a method of molding the composite material 260 (FIG. 13) using the explosive welding device 200 described above. At the time of molding, first, as illustrated in FIG. 12, the joined member 216 is disposed on the upper surface of the fixing part 214 and the reinforcement member 226 is disposed on the upper surface of the joined member 216. The flying member 224 is disposed on the lower surface of the explosive 218 (above joined member 216 and reinforcement member 226).

The joined member 216 is a plate-like member extending in the direction perpendicular to the paper surface of FIG. 12. In the third embodiment, the joined member 216 is an aluminum alloy plate having a certain thickness.

The reinforcement member 226 has a plurality of strand (rope or string) tows 226a extending in the direction perpendicular to the paper surface of FIG. 12. In the third embodiment, each of the tows 226a is an aggregate of long fiber bundles (filaments) obtained by bundling a large number of carbon single fibers. That is, the reinforcement member 226 is made of carbon fiber. The plurality of tows 226a of the reinforcement member 226 are arranged in parallel on the upper surface of the joined member 216 while being aligned in the same direction. The reinforcement member 226 (plurality of tows 226a) is disposed only on an area of the upper surface of the joined member 216 except for its peripheral edge portion.

The flying member 224 is a plate-like member extending in the direction perpendicular to the paper surface of FIG. 12. In the third embodiment, the flying member 224 is a steel plate having a certain thickness. The width (dimension in left-right direction in FIG. 12) and length of the flying member 224 are substantially equal to the width and length of the joined member 216. The entire lower surface of the flying member 224 opposes the upper surface of the joined member 216 with the reinforcement member 226 interposed between the flying member 224 and the joined member 216. FIG. 12 illustrates a state where the flying member 224 and the joined member 216 are opposed to each other with a sufficient space therebetween for the sake of convenience. However, the distance between the flying member 224 and the joined member 216 is adjusted to an appropriate value suitable for joining of the flying member 224 and the joined member 216.

In a state where the joined member 216, the flying member 224, and the reinforcement member 226 are disposed in the positional relationship described above, an electric signal is transmitted from the detonation controller 222 and the electric detonator 220 is ignited. As a result, the explosive 218 explodes and an explosive force 228 is generated, as illustrated in FIG. 13. The explosive force 228 then urges the flying member 224 downward, so that the flying member 224 collides with the joined member 216 with a large force. The flying member 224 and the joined member 216 are joined by this collision with the reinforcement member 226 interposed between the flying member 224 and the joined member 216, so that the composite material 260 is obtained. The impact when the flying member 224 collides with the joined member 216 is absorbed by the fixing part 214.

The thickness of the composite material 260 is set to 0.01 mm or more and 1 mm or less, preferably 0.1 mm or more and 1 mm or less, as in the first embodiment. The thickness of each of the joined member 216 and the flying member 224 and the diameter of each tow 226a of the reinforcement member 226 are appropriately adjusted so as to obtain the composite material 260 having a thickness in the range mentioned above (0.01 mm to 1 mm). Further, the amount of the explosive 218 is adjusted so as to obtain appropriate explosion energy capable of joining the joined member 216 and the flying member 224 with sufficient strength without any damage.

When the composite material 260 having the configuration described above is joined to another component (reinforced component), the composite material 260 can be easily deformed to the shape of the other component. For this reason, the composite material 260 and the other component can be successfully joined without any gap between the composite material 260 and the other component. This leads to a sufficient increase in the mechanical strength of the other component.

### (4) Fourth Embodiment

### (4-1) Molding Device

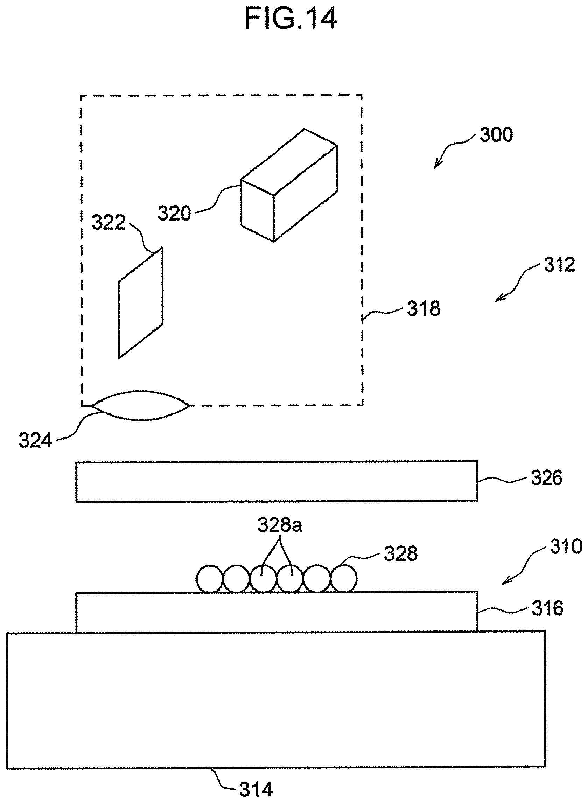

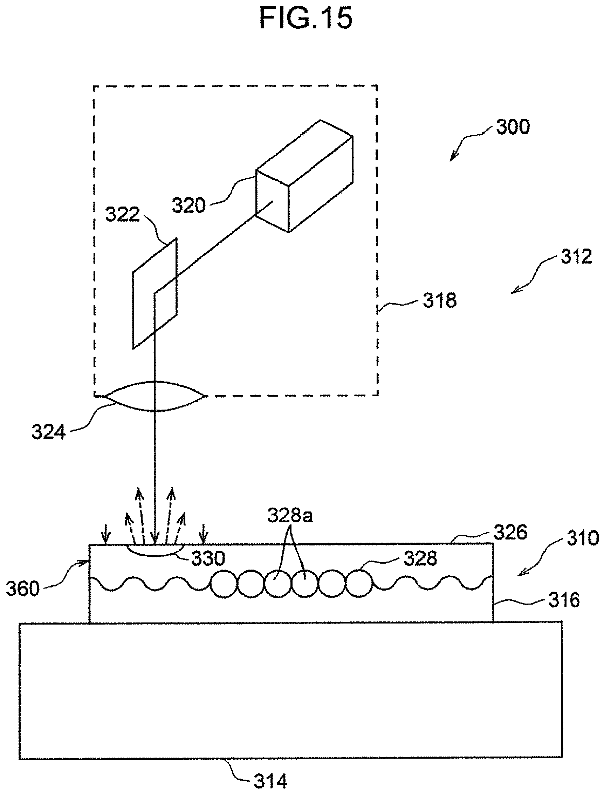

FIG. 14 is a view illustrating a schematic configuration of a laser irradiation device 300 used in a molding method according to a fourth embodiment of the present invention. The laser irradiation device 300 is a molding device that molds a composite material 360 (FIG. 15) by a joining method using laser ablation, and joins a flying member 326 (first member) and a joined member 316 (second member) with a reinforcement member 328 interposed between the flying member 326 and the joined member 316.

As illustrated in FIG. 14, the laser irradiation device 300 mainly includes a lower structure 310 and an upper structure 312 disposed above the lower structure 310.

The lower structure 310 includes a fixing part 314 made of a highly rigid block-like member extending in a direction perpendicular to a paper surface of FIG. 14, and a jig (not illustrated) that holds the joined member 316 on an upper surface of the fixing part 314. The jig has, for example, a vise for fixing an end of the joined member 316 on the upper surface of the fixing part 314.

The upper structure 312 includes a laser irradiator 318 and a jig (not illustrated) that holds the flying member 326 at a position below the laser irradiator 318. The laser irradiator 318 has a laser oscillator 320, a mirror 322, and a lens 324. The laser output from the laser oscillator 320 may be any of a YAG laser, a CO₂ laser, and other lasers. The laser irradiator 318 is configured to irradiate a laser oscillated from the laser oscillator 320 from the lens 324 via the mirror 322. The jig is configured to, for example, support an end of the flying member 326 so that the flying member 326 does not fall from the laser irradiator 318 before laser irradiation (before occurrence of laser ablation), and at the same time, to allow the flying member 326 to fly toward the joined member 316 after the laser irradiation.

### (4-2) Molding Method

Next, there will be described an example of a method of molding the composite material 360 (FIG. 15) using the laser irradiation device 300 described above. At the time of molding, first, as illustrated in FIG. 14, the joined member 316 is disposed on the upper surface of the fixing part 314 and the reinforcement member 328 is disposed on the upper surface of the joined member 316. The flying member 326 is disposed below the laser irradiator 318 (above joined member 316 and reinforcement member 328).

The joined member 316 is a plate-like member extending in the direction perpendicular to the paper surface of FIG. 14. In the fourth embodiment, the joined member 316 is an aluminum alloy plate having a certain thickness.

The reinforcement member 328 has a plurality of strand (rope or string) tows 328a extending in the direction perpendicular to the paper surface of FIG. 14. In the fourth embodiment, each of the plurality of tows 328a is an aggregate of long fiber bundles (filaments) obtained by bundling a large number of carbon single fibers. That is, the reinforcement member 328 is made of carbon fiber. The plurality of tows 328a of the reinforcement member 328 are arranged in parallel on the upper surface of the joined member 316 while being aligned in the same direction. The reinforcement member 328 (plurality of tows 328a) is disposed only on an area of the upper surface of the joined member 316 except for its peripheral edge portion.

The flying member 326 is a plate-like member extending in the direction perpendicular to the paper surface of FIG. 14. In the fourth embodiment, the flying member 326 is a steel plate having a certain thickness. The width (dimension in left-right direction in FIG. 14) and length of the flying member 326 are substantially equal to the width and length of the joined member 316. The entire lower surface of the flying member 326 opposes the upper surface of the joined member 316 with the reinforcement member 328 interposed between the flying member 326 and the joined member 316. FIG. 14 illustrates a state where the flying member 326 and the joined member 316 are opposed to each other with a sufficient space therebetween for the sake of convenience. However, the distance between the flying member 326 and the joined member 316 is adjusted to an appropriate value suitable for joining of the flying member 326 and the joined member 316.

In a state where the joined member 316, the flying member 326, and the reinforcement member 328 are disposed in the positional relationship described above, a laser is irradiated from the laser irradiator 318 to the flying member 326. As a result, as illustrated in FIG. 15, laser ablation in which the upper surface of the flying member 326 evaporates (vaporizes) occurs around a position 330 irradiated with the laser (see dashed and dotted arrows). The flying member 326 is then urged downward by the pressure of evaporated gas to collide with the joined member 316 with a large force. The flying member 326 and the joined member 316 are joined by this collision with the reinforcement member 328 interposed between the flying member 326 and the joined member 316, so that the composite material 360 is obtained. The impact when the flying member 326 collides with the joined member 316 is absorbed by the fixing part 314.

The thickness of the composite material 360 is set to 0.01 mm or more and 1 mm or less, preferably 0.1 mm or more and 1 mm or less, as in the first embodiment. The thickness of each of the joined member 316 and the flying member 326 and the diameter of each tow 328a of the reinforcement member 328 are appropriately adjusted so as to obtain the composite material 360 having a thickness in the range mentioned above (0.01 mm to 1 mm). Further, the laser energy irradiated from the laser irradiator 318 is adjusted to an appropriate value at which the joined member 316 and the flying member 326 are joined with sufficient strength without any damage.

When the composite material 360 having the configuration described above is joined to another component (reinforced component), the composite material 360 can be easily deformed to the shape of the other component. For this reason, the composite material 360 and the other component can be successfully joined without any gap between the composite material 360 and the other component. This leads to a sufficient increase in the mechanical strength of the other component.

### (5) Summary

The embodiments described above are summarized as follows.

The molding method according to the embodiments described above is a method of molding a composite material including a first member, a second member, and a reinforcement member interposed between the first member and the second member, the method including a first step of disposing the reinforcement member between the first member and the second member, and a second step of causing the first member to collide with the second member by a predetermined urging force after the reinforcement member is disposed, thus joining the first member and the second member with the reinforcement member interposed between the first member and the second member. The composite material has a thickness of 0.01 mm or more and 1 mm or less.

According to this molding method, the composite material having a structure in which the reinforcement member is disposed between the first member and the second member is molded only by collision of the members. It is thus possible to improve the molding efficiency of the composite material. In addition, since the thickness of the composite material is as small as 1 mm or less, the weight of the composite material can be reduced, and when the composite material is joined to another component, the composite material can be easily deformed to the shape of the other component. The mechanical strength of the other component can be improved by joining the composite material to the other component while an increase in weight is prevented.

In the method described above, the predetermined urging force is preferably an electromagnetic force applied to the first member.

According to this configuration, the composite material can be efficiently molded by so-called electromagnetic molding using the electromagnetic force.

The predetermined urging force may be an explosive force applied to the first member.

According to this configuration, the composite material can be efficiently molded by so-called explosive welding using the explosive force.

The predetermined urging force may be a pressure of gas generated by irradiating the first member with a laser.

According to this configuration, the composite material can be efficiently molded by a molding method using so-called laser ablation.

In the method described above, a thickness of the first member is preferably smaller than a thickness of the second member, in the first step, the first member and the second member are stacked in a thickness direction with the reinforcement member interposed between the first member and the second member, and properties of each of the first member, the second member, and the reinforcement member are determined so that a neutral axis of the composite material is included in the second member.

According to this configuration, the composite material having high tensile strength can be molded on a side closer to the first member with respect to the neutral axis.

Properties of each of the first member and the second member may include a thickness and a Young's modulus, and properties of the reinforcement member may include a cross-sectional area and a Young's modulus.

According to this configuration, by adjusting the thickness (or cross-sectional area) and Young's modulus of each member, the composite material in which the neutral axis is included in the second member can be appropriately molded.

The reinforcement member may include any of carbon fiber, glass fiber, and Kevlar.

According to this configuration, the composite material including the reinforcement member having high tensile strength and high elastic modulus can be molded.

The structural body according to the embodiments described above includes the composite material including the first member, the second member, and the reinforcement member that are joined to each other by the above-described method, and another component to which the composite material is joined.

According to this configuration, another component can be appropriately reinforced by the composite material, and the structural body having high mechanical strength can be provided.

In the structural body described above, a thickness of the first member is preferably smaller than a thickness of the second member, and properties of each of the first member, the second member, and the reinforcement member are determined so that a neutral axis of the composite material is included in the second member.

According to this configuration, the bending strength of the other component can be improved by using the composite material having high tensile strength on the side closer to the first member with respect to the neutral axis.

Properties of each of the first member and the second member may include a thickness and a Young's modulus, and properties of the reinforcement member may include a cross-sectional area and a Young's modulus.

According to this configuration, the bending strength of the other component can be improved by using the composite material in which the thickness (or cross-sectional area) and Young's modulus of each member are appropriately adjusted.

The reinforcement member may include any of carbon fiber, glass fiber, and Kevlar.

According to this configuration, the other component can be sufficiently reinforced by using the composite material including the reinforcement member having high tensile strength and high elastic modulus.

The first member and the second member are preferably joined so as to seal the reinforcement member.

According to this configuration, since an end of the reinforcement member does not directly contact the other component, it is possible to prevent electrolytic corrosion that may occur between the reinforcement member and the other component.

The composite material preferably has a thickness of 0.01 mm or more and 0.2 mm or less.

According to this configuration, the composite material can be easily joined to the other component.

When the other component is joined to the first member, the first member and the other component are preferably made of a same material.

According to this configuration, it is possible to prevent electrolytic corrosion that may occur between the first member and the other component.

When the other component is joined to the second member, the second member and the other component are preferably made of a same material.

According to this configuration, it is possible to prevent electrolytic corrosion that may occur between the second member and the other component.

This application is based on Japanese Patent application No. 2019-108110 filed in Japan Patent Office on June 10, 2019 and Japanese Patent application No. 2019-107967 filed in Japan Patent Office on June 10, 2019, the contents of which are hereby incorporated by reference.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. A method of molding a composite material (60) including a first member (28), a second member (26), and a reinforcement member (30) interposed between the first member (28) and the second member (26), the method comprising:
a first step of disposing the reinforcement member (30) between the first member (28) and the second member (26); and
a second step of causing the first member (28) to collide with the second member (26) by a predetermined urging force after the reinforcement member (30) is disposed, thus joining the first member (28) and the second member (26) with the reinforcement member (30) interposed between the first member (28) and the second member (26),
wherein the composite material (60) has a thickness of 0.01 mm or more and 1 mm or less.

2. The method of molding a composite material according to claim 1, wherein the predetermined urging force is an electromagnetic force (46) applied to the first member (28).

3. The method of molding a composite material according to claim 1, wherein the predetermined urging force is an explosive force (228) applied to the first member (224).

4. The method of molding a composite material according to claim 1, wherein the predetermined urging force is a pressure of gas generated by irradiating the first member (326) with a laser.

5. The method of molding a composite material according to any one of claims 1 to 4, wherein
a thickness of the first member (128) is smaller than a thickness of the second member (126),
in the first step, the first member (128) and the second member (126) are stacked in a thickness direction with the reinforcement member (130) interposed between the first member (128) and the second member (126), and
properties of each of the first member (128), the second member (126), and the reinforcement member (130) are determined so that a neutral axis (164) of the composite material (160) is included in the second member (126).

6. The method of molding a composite material according to claim 5, wherein properties of each of the first member (128) and the second member (126) include a thickness and a Young's modulus, and
properties of the reinforcement member (130) include a cross-sectional area and a Young's modulus.

7. The method of molding a composite material according to any one of claims 1 to 6, wherein the reinforcement member (30) includes any of carbon fiber, glass fiber, and Kevlar.

8. A structural body comprising:
the composite material (60) including the first member (28), the second member (26), and the reinforcement member (30) that are joined to each other by the method according to any one of claims 1 to 4; and
another component (70) to which the composite material (60) is joined.

9. The structural body according to claim 8, wherein
a thickness of the first member (128) is smaller than a thickness of the second member (126), and
properties of each of the first member (128), the second member (126), and the reinforcement member (130) are determined so that a neutral axis (164) of the composite material (160) is included in the second member (126).

10. The structural body according to claim 9, wherein properties of each of the first member (128) and the second member (126) include a thickness and a Young's modulus, and
properties of the reinforcement member (130) include a cross-sectional area and a Young's modulus.

11. The structural body according to any one of claims 8 to 10, wherein the reinforcement member (30) includes any of carbon fiber, glass fiber, and Kevlar.

12. The structural body according to any one of claims 8 to 11, wherein the first member (28) and the second member (26) are joined so as to seal the reinforcement member (30).

13. The structural body according to any one of claims 8 to 12, wherein the composite material (60) has a thickness of 0.01 mm or more and 0.2 mm or less.

14. The structural body according to any one of claims 8 to 13, wherein the other component (70) is joined to the first member (28), and
the first member (28) and the other component (70) are made of a same material.

15. The structural body according to any one of claims 8 to 13, wherein the other component (170) is joined to the second member (126), and
the second member (126) and the other component (170) are made of a same material.
